# EUROPEAN PATENT SPECIFICATION

(11) **EP 3 565 198 B1**
(45) Date of publication and mention of the grant of the patent: **26.10.2022**
(21) Application number: 18170100.4
(22) Date of filing: 30.04.2018
(51) Int. Cl.: H04L 9/40, H03M 13/11, H04L 1/00

(54) **TRANSMITTING SECURITY INFORMATION OVER A WIRED LINK**
ÜBERTRAGEN VON SICHERHEITSINFORMATIONEN ÜBER EINEN WIRED LINK
TRANSMISSION D'INFORMATIONS DE SÉCURITÉ SUR UNE LIAISON CÂBLÉE

(43) Date of publication of application: 06.11.2019
(73) Proprietor: INTEL Corporation, Santa Clara, CA 95054 (US)
(72) Inventor: GOH, Chee Kiang, Singapore 650172 (SG); MOUCHEL LA FOSSE, Eric, Singapore 550544 (SG); SUKUMARAN, Biju, Singapore 520812 (SG)
(74) Representative: 2SPL Patentanwälte PartG mbB

(56) References cited:
- US-B1- 9 363 039
- IEEE: "IEEE Standard for Ethernet Amendment 7: Media Access Control Parameters, Physical Layers, and Management Parameters for 2.5 Gb/s and 5 Gb/s Operation, Types 2.5GBASE-T and 5GBASE-T Sponsored by the LAN/MAN Standards Committee IEEE Standard for Ethernet", IEEE STANDARD, no. 802, 22 September 2016 (2016-09-22), pages 1-185, XP055485490,

## Description

### Field

The present disclosure relates to exchanging security information for increased network security.

### Background

Home-Gateway networks are susceptible to various forms of attacks. In terms of Open Systems Interconnection model (OSI model) layers, higher layer attacks are in general more difficult to detect and defend. Domain Name System (DNS) poisoning, Structured Query Language (SQL) injection, or phishing may be exemplary application layer attacks. Exemplary data link layer attacks may, e.g., be Address Resolution Protocol (ARP) spoofing, Medium Access Control (MAC) flooding, eavesdropping, or traffic analysis.

In a home, an office, or a building, a rogue client may be connected to a network over a wired medium (e.g. via a switch with port replication capability). Despite various means of defense in the network, the rogue client may still be able to eavesdrop or analyze the traffic in the network.

Document IEEE: "IEEE Standard for Ethernet Amendment 7: Media Access Control Parameters, Physical Layers, and Management Parameters for 2.5 Gb/s and 5 Gb/s Operation, Types 2.5GBASE-T and 5GBASE-T Sponsored by the LAN/MAN Standards Committee IEEE Standard for Ethernet", IEEE STANDARD, no. 802, 22 September 2016 (2016-09-22), pages 1-185 proposes to replace 97 zero-bits appended to payload bits by vendor-defined random data prior to transmission. Similarly, document US 9,363,039 B1 proposes to replace zero-bits appended to payload bits by pseudorandom bits or bits indicating additional payload data prior to transmission.

### Brief description of the Figures

Fig. 1 illustrates an example of a wired communication system comprising a transmitter and a receiver;
Fig. 2 illustrates an example of how an attack scenario by a rogue connection can be prevented by security information exchange according to the proposed technique;
Fig. 3 illustrates a flowchart of an example of a method for transmitting security information over a wired link; and
Fig. 4 illustrates a flowchart of an example of a method of operating a receiver for a wired link.

### Detailed Description

The invention is defined by the independent claims. Preferred embodiments are defined in the dependent claims.

Various examples will now be described more fully with reference to the accompanying drawings in which some examples are illustrated. In the figures, the thicknesses of lines, layers and/or regions may be exaggerated for clarity.

Accordingly, while further examples are capable of various modifications and alternative forms, some particular examples thereof are shown in the figures and will subsequently be described in detail. However, this detailed description does not limit further examples to the particular forms described. Further examples may cover all modifications, equivalents, and alternatives falling within the scope of the disclosure. Same or like numbers refer to like or similar elements throughout the description of the figures, which may be implemented identically or in modified form when compared to one another while providing for the same or a similar functionality.

It will be understood that when an element is referred to as being "connected" or "coupled" to another element, the elements may be directly connected or coupled or via one or more intervening elements. If two elements A and B are combined using an "or", this is to be understood to disclose all possible combinations, i.e. only A, only B as well as A and B, if not explicitly or implicitly defined otherwise. An alternative wording for the same combinations is "at least one of A and B" or "A and/or B". The same applies, mutatis mutandis, for combinations of more than two Elements.

The terminology used herein for the purpose of describing particular examples is not intended to be limiting for further examples. Whenever a singular form such as "a", "an", and "the" is used and using only a single element is neither explicitly or implicitly defined as being mandatory, further examples may also use plural elements to implement the same functionality. Likewise, when a functionality is subsequently described as being implemented using multiple elements, further examples may implement the same functionality using a single element or processing entity. It will be further understood that the terms "comprises", "comprising", "includes" and/or "including", when used, specify the presence of the stated features, integers, steps, operations, processes, acts, elements and/or components, but do not preclude the presence or addition of one or more other features, integers, steps, operations, processes, acts, elements, components and/or any group thereof.

Unless otherwise defined, all terms (including technical and scientific terms) are used herein in their ordinary meaning of the art to which the examples belong.

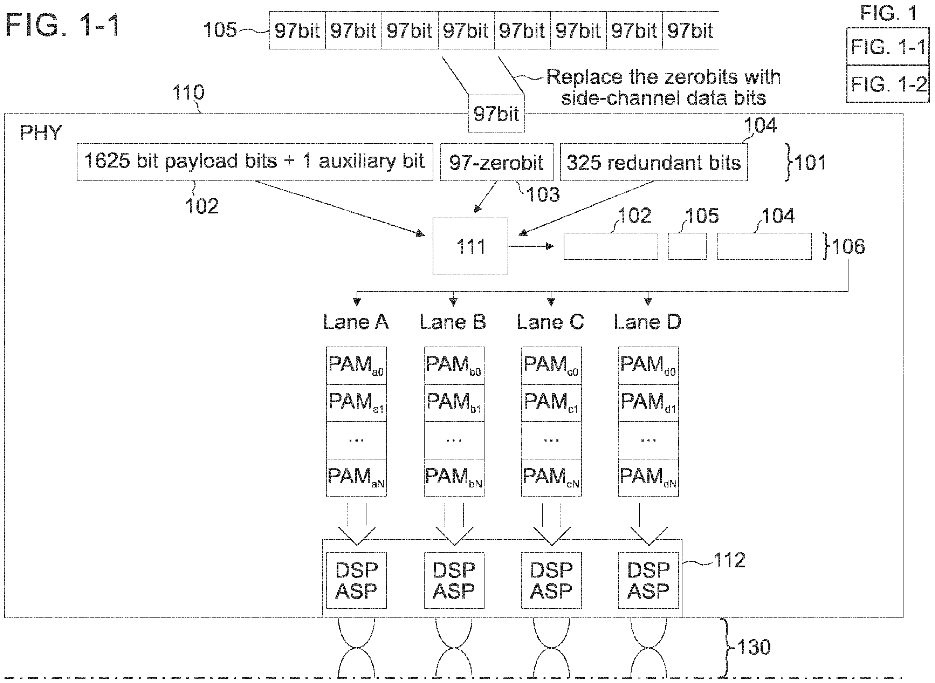

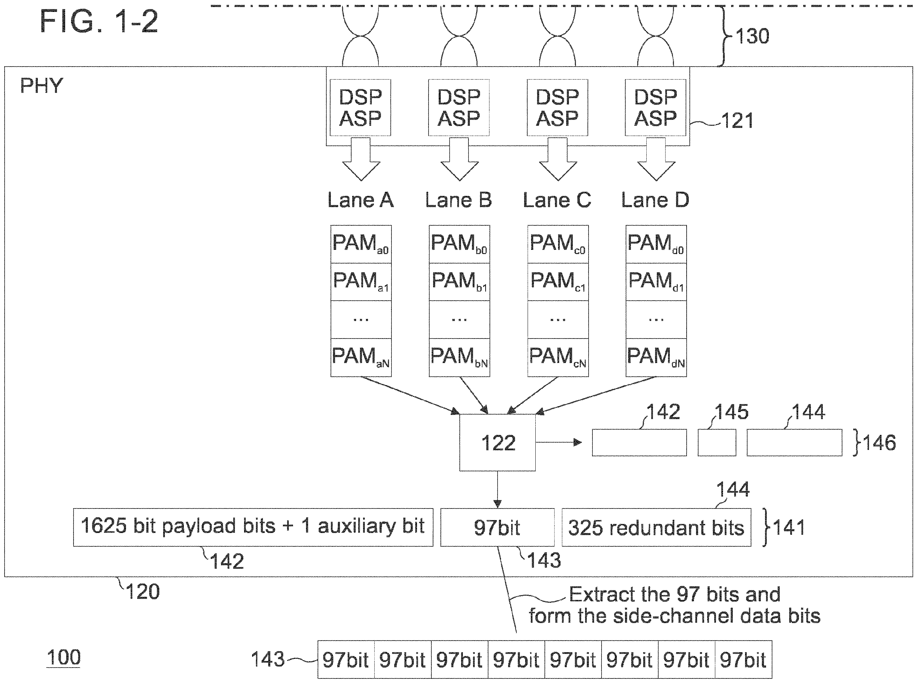

Fig. 1 illustrates an example of a wired communication system 100 comprising a transmitter 110 and a receiver 120 coupled over a wired link 130. For example, the wired communication system 100 may, e.g., be part of a home network or a network within an office or a building. As indicated in Fig. 1, the wired link 130 may, e.g., be formed by one or more (pairs of) twisted wires or one or more fibers.

In order to enable safe communication between transmitter 110 and receiver 120, security information may be exchanged between both entities. The security information may, e.g., be information about one of a cryptographic key negotiation, a cryptographic key challenge, and a cryptographic key update. For example, the cryptographic key may be a cipher key.

Transmitter 110 is configured to transmit the security information over wired link 130 to receiver 120 in the physical layer. To this end, transmitter 100 comprises a processor 111. Processor 111 is configured to receive a first physical layer transmit frame 101 for transmission over wired link 130. The first physical layer transmit frame 101 comprises at least a first plurality of bits 102 indicative of a payload and an additional/separate second plurality of consecutive zero-bits 103. Optionally, the first physical layer transmit frame 101 may comprise one or more additional bits 104 (e.g. redundant bits for transmission error correction).

In the example illustrated in Fig. 1, the first physical layer transmit frame 101 is a physical layer transmit frame according to the standard IEEE 802.3 bz of the Institute of Electrical and Electronics Engineers (IEEE) and comprises 1626 bits indicative of the payload, 97 zero-bits and 325 redundant bits. The standard uses the 97 zero-bits to encode the data payload of 1626 bits using Low-Density-Parity-Check-Code (LDPC) encoding (e.g. LDPC 1723 or 2048). That is, the second plurality of zero-bits 103 are defined by the communication standard. However, it is to be noted that the proposed technique is not limited to the above mentioned standard and/or the above mentioned numbers of bits. In general, the first physical layer transmit frame 101 may be according to any standard for wired communication and comprise a first plurality of bits 102 indicative of a payload and a second plurality of consecutive zero-bits 103 of any bit lengths.

Processor 111 is further configured to replace at least part of the second plurality of zero-bits 103 with a third plurality of bits 105 indicative of the security information in order to generate a second physical layer transmit frame 106. Referring to the above example, second physical layer transmit frame 106 illustrated in Fig. 1 comprises the 1626 bits indicative of the payload, 97 bits indicative of the security information replacing the 97 zero-bits, and the 325 redundant bits. However, it is to be noted that not all zero-bits of the second plurality of consecutive zero-bits 103 need to be replaced by bits indicative of the security information. For example, only part of the 97 zero-bits in the first physical layer transmit frame 101 of the above example may be replaced by bits indicative of the security information. Accordingly, the second physical layer transmit frame 106 may in some example comprise a part of the second plurality of consecutive zero-bits 103 and the third plurality of bits 105 indicative of the security information.

Transmitter 100 further comprises an interface 112 configured to output, based on the second physical layer transmit frame 106, one or more transmit signals to wired link 130. As indicated in Fig. 1, the interface 112 may comprise analog and/or digital signal processing circuitry to drive the one or more transmit signals on, e.g., twisted wire pairs. In the example illustrated in Fig. 1, the second physical layer transmit frame 106 is encoded and transmitted and distributed over four physical channels (Lanes A to D). For example, processor 111 or another processor of transmitter 110 may calculate channel coefficients (PAMₐ₀ ... PAM_{aN}, ..., PAM_{d0} ... PAM_{dN}) for the different channels and the interface 112 may comprise analog and/or digital signal processing circuitry for each channel. It is to be noted that the encoding is optional and the number of physical channels may in general be any number.

That is, transmitter 100 uses the zero-field bits in the first physical layer transmit frame 101 to establish a side-band channel for communicating the security information (e.g. security keys). Optional, security and error correction may be overlaid in the side-channel data stream. In other words, the security information may be encrypted and/or protected against transmission errors (e.g. error encoded).

On the other hand, receiver 120 comprises an interface 121 configured to receive one or more receive signals from wired link 130 (i.e. interface 121 receives the one or more transmit signals output by transmitter 110 to wired link 130).

Further, receiver 120 comprises a processor 122 configured to determine, based on the one or more receive signals, a first physical layer receive frame 141 comprising at least a first plurality of bits 142 indicative of a payload and a second plurality 143 of bits indicative of security information. Optionally, the first physical layer receive frame 141 may comprise one or more additional bits 144 (e.g. redundant bits for transmission error correction). As exemplarily illustrated in Fig. 1, processor 122 may, e.g., decode the receive signals received via the twisted wires of wired link 130 and recombine them to a LDPC frame in accordance with the IEEE 802.3 bz standard. Accordingly, the first physical layer receive frame 141 illustrated in Fig. 1 comprises 1626 bits indicative of the payload, 97 bits indicative of security information and 325 redundant bits for transmission error correction.

Processor 122 is further configured to extract the second plurality of bits 143 from the first physical layer receive frame 141 and to replace the second plurality of bits 143 with zero-bits 145 in order to generate a second physical layer receive frame 146. Referring to the above example, second physical layer receive frame 146 illustrated in Fig. 1 comprises the 1626 bits indicative of the payload, 97 zero-bits, and the 325 redundant bits in accordance with the IEEE 802.3 bz standard. In other words, processor 122 is configured to generate the second physical layer receive frame 146 to comprise a third plurality of consecutive zero-bits 145 as defined by a communication standard, wherein the third plurality of zero-bits 145 comprises the zero-bits replacing the second plurality of bits 143.

That is, receiver 120 extracts the security information from the first physical layer receive frame 141 and forces them zero on the receive path before the physical layer receive frame is decoded in order to generate a physical layer receive frame according to the communication standard. Instead of just discarding them, the zero-bits are used to carry side-channel data bits for exchanging security information.

The processor 122 may, e.g., be configured to provide the second physical layer receive frame 146 to circuitry (not illustrated) for processing the first plurality of bits 142 (e.g. decoding the payload). Since the bits carrying the security information are forced zero in the second physical layer receive frame 146, the second physical layer receive frame 146 is in accordance with the used communication standard so that the circuitry for processing the first plurality of bits 142 may conventionally process the second physical layer receive frame 146.

Further, processor 122 may be configured to provide the second plurality of bits 143 to circuitry (not illustrated) of the receiver for communication security. The circuitry for communication security may, e.g., further process security keys (e.g. cipher keys) indicated in the received security information.

Transmitting the security information according to the proposed technique may be advantageous for several reasons. For example, it is not easy to analyze the physical layer data stream via traffic sniffing since it is not correlated to traffic from higher layers according to the OSI model. It is also difficult to decode the security information by snooping as the transmission in the physical layer is bidirectional and point-to-point (i.e. not bridging tap allowed). Further, cryptographic key (e.g. cipher key) challenges, negotiations or updates may be done invisible to higher layers in order to secure the physical layer connection as well as higher layers.

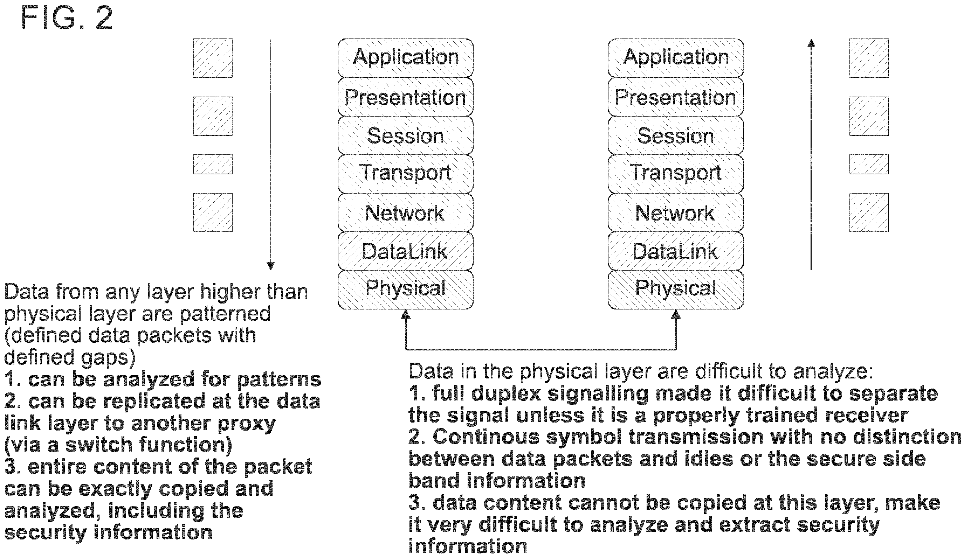

As illustrated more detailed in **Fig. 2****,** cryptographic key (e.g. cipher key) admission, exchange, or challenges may done over the proposed physical layer side-band channel, which is independent of any higher layer traffic activities (i.e. not encapsulated in packets). Data from any layer higher than the physical layer are patterned (i.e. defined data packets with defined gaps). The data packets may be analyzed for data patterns. Further, at a data link, the packet data may even be replicated as part of a switch function and an exact copy of the transmitted information may be analyzed. For example, if security information was transmitted in a layer higher than the physical layer, an exact copy of the security information may be generated and be analyzed by a rogue client.

The proposed physical layer side-band transmission of the security data makes it difficult to analyze the transmitted data. The full duplex signaling of the physical layer makes it difficult to separate the individual signals. Further, the physical layer provides a continuous symbol transmission with no distinction between data packets and idles or the security side-band information. Additionally, the data content cannot by copied at the physical layer, which makes it very difficult to analyze and extract the security information. Also various signal and channel distortions in the physical layer render direct analysis and extraction of data extremely difficult.

The proposed technique may allow to identify rogue connections as physically insecure links (e.g. by checking if security information may be exchanged via a physical layer side-band channel). Higher layer policies may, hence, act accordingly to protect their interest.

In summary, security information exchanged according to the proposed technique is hard to analyze for a rogue attacker so that the network security may be increased.

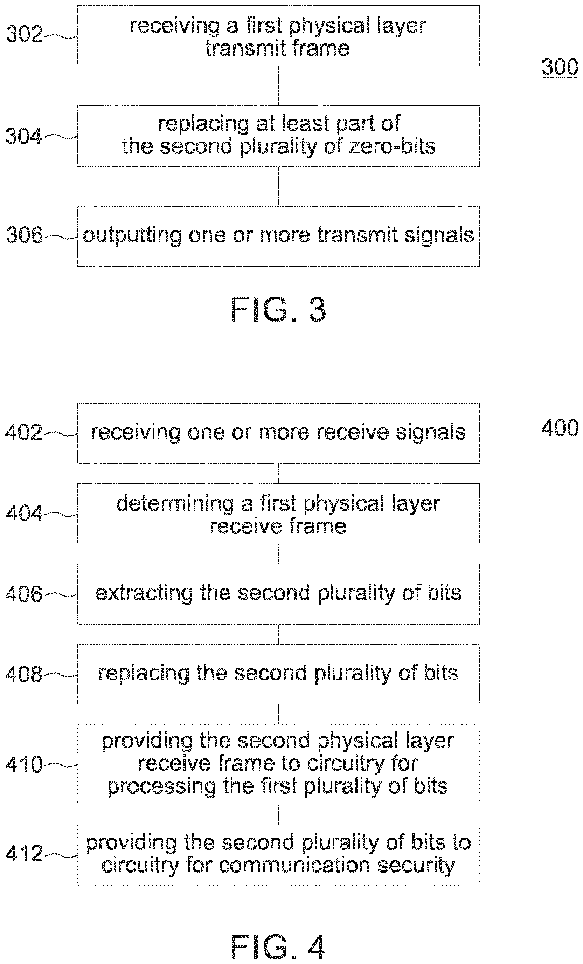

To summarize the above, an example of a method 300 for transmitting security information over a wired link is illustrated by means of a flowchart in **Fig. 3**. Method 300 comprises receiving 302 a first physical layer transmit frame comprising at least a first plurality of bits indicative of a payload and a second plurality of consecutive zero-bits. Further, method 300 comprises replacing 304 at least part of the second plurality of zero-bits with a third plurality of bits indicative of the security information in order to generate a second physical layer transmit frame. Method 300 additionally comprises outputting 306, based on the second physical layer transmit frame, one or more transmit signals to the wired link.

More details and aspects of method 300 are mentioned in connection with the proposed technique or one or more examples described above (e.g. Figs. 1 and 2). The method may comprise one or more additional optional features corresponding to one or more aspects of the proposed technique or one or more examples described above.

Further, **Fig. 4** illustrates by means of a flowchart a method 400 of operating a receiver for a wired link. Method 400 comprises receiving 402 one or more receive signals from the wired link. Further, method 400 comprises determining 404, based on the one or more receive signals, a first physical layer receive frame comprising at least a first plurality of bits indicative of a payload and a second plurality of bits indicative of security information. Method 400 additionally comprises extracting 406 the second plurality of bits from the first physical layer receive frame. Also, method 400 comprises replacing 408 the second plurality of bits with zero-bits in order to generate a second physical layer receive frame.

Optionally, method 400 may further comprise providing 410 the second physical layer receive frame to circuitry for processing the first plurality of bits. Further optionally, method 400 may additionally comprise providing 412 the second plurality of bits to circuitry for communication security.

More details and aspects of method 400 are mentioned in connection with the proposed technique or one or more examples described above (e.g. Figs. 1 and 2). The method may comprise one or more additional optional features corresponding to one or more aspects of the proposed technique or one or more examples described above.

In other words, some aspects of the present disclosure relate to a means for transmitting security information over a wired link, wherein the means for transmitting security information comprises a means for receiving a first physical layer transmit frame comprising at least a first plurality of bits indicative of a payload and a second plurality of consecutive zero-bits, a means for replacing at least part of the second plurality of zero-bits with a third plurality of bits indicative of the security information in order to generate a second physical layer transmit frame, and a means for outputting, based on the second physical layer transmit frame, one or more transmit signals to the wired link.

Further, some aspects of the present disclosure relate to a means for a wired link, wherein the means for the wired link comprises a means for receiving one or more receive signals from the wired link, a means for determining, based on the one or more receive signals, a first physical layer receive frame comprising at least a first plurality of bits indicative of a payload and a second plurality of bits indicative of the security information, a means for extracting the second plurality of bits from the first physical layer receive frame, and a means for replacing the second plurality of bits with zero-bits in order to generate a second physical layer receive frame.

By using physical layer zero-field bits as a side-band channel for exchanging the security information, the security information is hard to analyze for a rogue attacker so that the network security may be increased.

The examples as described herein may be summarized as follows:

A functional block denoted as "means for ..." performing a certain function may refer to a circuit that is configured to perform a certain function. Hence, a "means for s.th." may be implemented as a "means configured to or suited for s.th.", such as a device or a circuit configured to or suited for the respective task.

Functions of various elements shown in the figures, including any functional blocks labeled as "means", "means for providing a signal", "means for generating a signal.", etc., may be implemented in the form of dedicated hardware, such as "a signal provider", "a signal processing unit", "a processor", "a controller", etc. as well as hardware capable of executing software in association with appropriate software. When provided by a processor, the functions may be provided by a single dedicated processor, by a single shared processor, or by a plurality of individual processors, some of which or all of which may be shared. However, the term "processor" or "controller" is by far not limited to hardware exclusively capable of executing software, but may include digital signal processor (DSP) hardware, network processor, application specific integrated circuit (ASIC), field programmable gate array (FPGA), read only memory (ROM) for storing software, random access memory (RAM), and nonvolatile storage. Other hardware, conventional and/or custom, may also be included.

A block diagram may, for instance, illustrate a high-level circuit diagram implementing the principles of the disclosure. Similarly, a flow chart, a flow diagram, a state transition diagram, a pseudo code, and the like may represent various processes, operations or steps, which may, for instance, be substantially represented in computer readable medium and so executed by a computer or processor, whether or not such computer or processor is explicitly shown. Methods disclosed in the specification or in the claims may be implemented by a device having means for performing each of the respective acts of these methods.

It is to be understood that the disclosure of multiple acts, processes, operations, steps or functions disclosed in the specification or claims may not be construed as to be within the specific order, unless explicitly or implicitly stated otherwise, for instance for technical reasons.

Therefore, the disclosure of multiple acts or functions will not limit these to a particular order unless such acts or functions are not interchangeable for technical reasons. Furthermore, in some examples a single act, function, process, operation or step may include or may be broken into multiple sub-acts, -functions, -processes, -operations or -steps, respectively. Such sub acts may be included and part of the disclosure of this single act unless explicitly excluded.

Furthermore, the following claims are hereby incorporated into the detailed description, where each claim may stand on its own as a separate example. While each claim may stand on its own as a separate example, it is to be noted that - although a dependent claim may refer in the claims to a specific combination with one or more other claims - other examples may also include a combination of the dependent claim with the subject matter of each other dependent or independent claim. Such combinations are explicitly proposed herein unless it is stated that a specific combination is not intended. Furthermore, it is intended to include also features of a claim to any other independent claim even if this claim is not directly made dependent to the independent claim.

## Claims

1. A wired communication system (100) for transmitting security information over a wired link (130) in addition to a payload, the wired communication system (100) comprising a transmitter (110) and a receiver (120) coupled over the wired link,
wherein the transmitter (110) comprises:
a first processor (111) configured to:
receive a first physical layer transmit frame (101) comprising at least a first plurality of bits (102) indicative of the payload and a second plurality of consecutive zero-bits (103), wherein the second plurality of zero-bits (105) are defined by a communication standard to encode the payload using Low-Density-Parity-Check-Code, LDPC, encoding such that the payload is protected against transmission errors; and
replace at least part of the second plurality of zero-bits (103) with a third plurality of bits (105) indicative of security information in order to generate a second physical layer transmit frame (106), and
a first interface (112) configured to output, based on the second physical layer transmit frame (106), one or more transmit signals to the wired link (130), and
wherein the receiver (120) comprises:
a second interface (121) configured to receive the one or more transmit signals from the wired link (130); and
a second processor (122) configured to:
determine, based on the one or more transmit signals, a first physical layer receive frame (141) comprising at least the first plurality of bits (142) and the third plurality of bits (143), wherein the first physical layer receive frame (141) is an LDPC frame;
extract the third plurality of bits (143) from the first physical layer receive frame (141); and
replace the third plurality of bits (143) with zero-bits in order to generate a second physical layer receive frame (146).

2. The system of claim 1, wherein the security information is encrypted.

3. The system of claim 1 or claim 2, wherein the security information comprises information about one of a cryptographic key negotiation, a cryptographic key challenge, and a cryptographic key update.

4. The system of claim 3, wherein the cryptographic key is a cipher key.

5. The system of any of claims 1 to 4, wherein the second processor (122) is configured to generate the second physical layer receive frame (146) to comprise the second plurality of consecutive zero-bits (145) as defined by the communication standard, wherein the second plurality of zero-bits (145) in the second physical layer receive frame (146) comprises the zero-bits replacing the third plurality of bits (143) in the first physical layer receive frame (141).

6. The system of any one of claims 1 to 5, wherein the second processor (122) is configured to provide the second physical layer receive frame (146) to circuitry for processing the first plurality of bits (142).

7. The system of any of claims 1 to 6, wherein the second processor (122) is configured to provide the second plurality of bits (143) to circuitry for communication security.

8. A method for a wired communication system for transmitting security information over a wired link in addition to a payload, the wired communication system comprising a transmitter and a receiver coupled over the wired link, the method comprising:
receiving, at the transmitter, a first physical layer transmit frame comprising at least a first plurality of bits indicative of the payload and a second plurality of consecutive zero-bits, wherein the second plurality of zero-bits (105) are defined by a communication standard to encode the payload using Low-Density-Parity-Check-Code, LDPC, encoding such that the payload is protected against transmission errors;
replacing, at the transmitter, at least part of the second plurality of zero-bits with a third plurality of bits indicative of the security information in order to generate a second physical layer transmit frame;
outputting, by the transmitter and based on the second physical layer transmit frame, one or more transmit signals to the wired link;
receiving, at the receiver, the one or more transmit signals from the wired link;
determining, by the receiver and based on the one or more transmit signals, a first physical layer receive frame comprising at least the first plurality of bits and the third plurality of bits, wherein the first physical layer receive frame is an LDPC frame;
extracting the third plurality of bits from the first physical layer receive frame; and
replacing the third plurality of bits with zero-bits in order to generate a second physical layer receive frame.

9. The method of claim 8, wherein the security information is encrypted.

10. The method of claim 8 or claim 9, wherein the security information comprises information about one of a cryptographic key negotiation, a cryptographic key challenge, and a cryptographic key update.

11. The method of claim 10, wherein the cryptographic key is a cipher key.

12. The method of any of claims 8 to 11, wherein the second physical layer receive frame is generated to comprise the second plurality of consecutive zero-bits as defined by the communication standard, wherein the second plurality of zero-bits in the second physical layer receive frame comprises the zero-bits replacing the third plurality of bits in the first physical layer receive frame.

13. The method of any one of claims 8 to 12, further comprising:
providing, by the receiver, the second physical layer receive frame to circuitry for processing the first plurality of bits.

14. The method of any of claims 8 to 13, further comprising:
providing, by the receiver, the second plurality of bits to circuitry for communication security.

## Patentansprüche

1. Drahtgebundenes Kommunikationssystem (100) zum Übertragen von Sicherheitsinformationen über eine drahtgebundene Verbindung (130) zusätzlich zu Nutzdaten, wobei das drahtgebundene Kommunikationssystem (100) einen Sender (110) und einen Empfänger (120), die über die drahtgebundene Verbindung gekoppelt sind, umfasst,
wobei der Sender (110) Folgendes umfasst:
einen ersten Prozessor (111), der für Folgendes konfiguriert ist:
Empfangen eines ersten Bitübertragungsschicht-Senderahmens (101), der mindestens eine erste Vielzahl von die Nutzdaten anzeigenden Bits (102) und eine zweite Vielzahl aufeinanderfolgender Nullbits (103) umfasst, wobei die zweite Vielzahl von Nullbits (105) durch einen Kommunikationsstandard zum Codieren der Nutzdaten unter Verwendung einer LDPC-Codierung (LDPC = Low-Density-Parity-Check-Code), damit die Nutzdaten gegen Übertragungsfehler geschützt werden, definiert wird; und
Ersetzen mindestens eines Teils der zweiten Vielzahl von Nullbits (103) durch eine dritte Vielzahl von Sicherheitsinformationen anzeigenden Bits (105), um einen zweiten Bitübertragungsschicht-Senderahmen (106) zu erzeugen, und
eine erste Schnittstelle (112), die konfiguriert ist, um basierend auf dem zweiten Bitübertragungsschicht-Senderahmen (106) ein oder mehrere Sendesignale an die drahtgebundene Verbindung (130) auszugeben, und
wobei der Empfänger (120) Folgendes umfasst:
eine zweite Schnittstelle (121), die konfiguriert ist, um das eine oder die mehreren Sendesignale von der drahtgebundenen Verbindung (130) zu empfangen; und
einen zweiten Prozessor (122), der für Folgendes konfiguriert ist:
Bestimmen eines ersten Bitübertragungsschicht-Empfangsrahmens (141), der mindestens die erste Vielzahl von Bits (142) und die dritte Vielzahl von Bits (143) umfasst, basierend auf dem einen oder den mehreren Sendesignalen, wobei der erste Bitübertragungsschicht-Empfangsrahmen (141) ein LDPC-Rahmen ist;
Extrahieren der dritten Vielzahl von Bits (143) aus dem ersten Bitübertragungsschicht-Empfangsrahmen (141); und
Ersetzen der dritten Vielzahl von Bits (143) durch Nullbits, um einen zweiten Bitübertragungsschicht-Empfangsrahmen (146) zu erzeugen.

2. System nach Anspruch 1, wobei die Sicherheitsinformationen verschlüsselt sind.

3. System nach Anspruch 1 oder Anspruch 2, wobei die Sicherheitsinformationen Informationen über eine Kryptografieschlüsselaushandlung oder eine Kryptografieschlüsselabfrage oder eine Kryptografieschlüsselaktualisierung umfassen.

4. System nach Anspruch 3, wobei der Kryptografieschlüssel ein Chiffrierschlüssel ist.

5. System nach einem der Ansprüche 1 bis 4, wobei der zweite Prozessor (122) konfiguriert ist, um den zweiten Bitübertragungsschicht-Empfangsrahmen (146) derart zu erzeugen, dass er die zweite Vielzahl aufeinanderfolgender Nullbits (145), wie durch den Kommunikationsstandard definiert, umfasst, wobei die zweite Vielzahl von Nullbits (145) in dem zweiten Bitübertragungsschicht-Empfangsrahmen (146) die Nullbits, die die dritte Vielzahl von Bits (143) in dem ersten Bitübertragungsschicht-Empfangsrahmen (141) ersetzen, umfasst.

6. System nach einem der Ansprüche 1 bis 5, wobei der zweite Prozessor (122) konfiguriert ist, um den zweiten Bitübertragungsschicht-Empfangsrahmen (146) einer Schaltung zum Verarbeiten der ersten Vielzahl von Bits (142) bereitzustellen.

7. System nach einem der Ansprüche 1 bis 6, wobei der zweite Prozessor (122) konfiguriert ist, um die zweite Vielzahl von Bits (143) einer Schaltung zum Verarbeiten für Kommunikationssicherheit bereitzustellen.

8. Verfahren für ein drahtgebundenes Kommunikationssystem zum Übertragen von Sicherheitsinformationen über eine drahtgebundene Verbindung zusätzlich zu Nutzdaten, wobei das drahtgebundene Kommunikationssystem einen Sender und einen Empfänger, die über die drahtgebundene Verbindung gekoppelt sind, umfasst, wobei das Verfahren Folgendes umfasst:
Empfangen eines ersten Bitübertragungsschicht-Senderahmens, der mindestens eine erste Vielzahl von die Nutzdaten anzeigenden Bits und eine zweite Vielzahl aufeinanderfolgender Nullbits umfasst, am Sender, wobei die zweite Vielzahl von Nullbits (105) durch einen Kommunikationsstandard zum Codieren der Nutzdaten unter Verwendung einer LDPC-Codierung (LDPC = Low-Density-Parity-Check-Code), damit die Nutzdaten gegen Übertragungsfehler geschützt werden, definiert wird;
Ersetzen mindestens eines Teils der zweiten Vielzahl von Nullbits durch eine dritte Vielzahl von die Sicherheitsinformationen anzeigenden Bits am Sender, um einen zweiten Bitübertragungsschicht-Senderahmen zu erzeugen;
Ausgeben eines oder mehrerer Sendesignale durch den Sender basierend auf dem zweiten Bitübertragungsschicht-Senderahmen an die drahtgebundene Verbindung;
Empfangen des einen oder der mehreren Sendesignale von der drahtgebundenen Verbindung am Empfänger;
Bestimmen eines ersten Bitübertragungsschicht-Empfangsrahmens, der mindestens die erste Vielzahl von Bits und die dritte Vielzahl von Bits umfasst, durch den Empfänger basierend auf dem einen oder den mehreren Sendesignalen, wobei der erste Bitübertragungsschicht-Empfangsrahmen ein LDPC-Rahmen ist;
Extrahieren der dritten Vielzahl von Bits aus dem ersten Bitübertragungsschicht-Empfangsrahmen; und
Ersetzen der dritten Vielzahl von Bits durch Nullbits, um einen zweiten Bitübertragungsschicht-Empfangsrahmen zu erzeugen.

9. Verfahren nach Anspruch 8, wobei die Sicherheitsinformationen verschlüsselt sind.

10. Verfahren nach Anspruch 8 oder Anspruch 9, wobei die Sicherheitsinformationen Informationen über eine Kryptografieschlüsselaushandlung oder eine Kryptografieschlüsselabfrage oder eine Kryptografieschlüsselaktualisierung umfassen.

11. Verfahren nach Anspruch 10, wobei der Kryptografieschlüssel ein Chiffrierschlüssel ist.

12. Verfahren nach einem der Ansprüche 8 bis 11, wobei der zweite Bitübertragungsschicht-Empfangsrahmen derart erzeugt wird, dass er die zweite Vielzahl aufeinanderfolgender Nullbits, wie durch den Kommunikationsstandard definiert, umfasst, wobei die zweite Vielzahl von Nullbits in dem zweiten Bitübertragungsschicht-Empfangsrahmen die Nullbits, die die dritte Vielzahl von Bits in dem ersten Bitübertragungsschicht-Empfangsrahmen ersetzen, umfasst.

13. Verfahren nach einem der Ansprüche 8 bis 12, das ferner Folgendes umfasst:
Bereitstellen des zweiten Bitübertragungsschicht-Empfangsrahmens durch den Empfänger für eine Schaltung zum Verarbeiten der ersten Vielzahl von Bits.

14. Verfahren nach einem der Ansprüche 8 bis 13, das ferner Folgendes umfasst:
Bereitstellen der zweiten Vielzahl von Bits durch den Empfänger für eine Schaltung für Kommunikationssicherheit.

## Revendications

1. Système (100) de communication câblé destiné à transmettre des informations de sécurité via une liaison câblée (130) en plus d'une charge utile, le système (100) de communication câblé comportant un émetteur (110) et un récepteur (120) couplés via la liaison câblée, l'émetteur (110) comportant :
un premier processeur (111) configuré pour :
recevoir une première trame (101) d'émission de couche physique comportant au moins une première pluralité de bits (102) indicative de la charge utile et une deuxième pluralité de bits à zéro (103) consécutifs, la deuxième pluralité de bits à zéro (105) étant définie par une norme de communication pour encoder la charge utile à l'aide d'un codage par code de contrôle de parité à faible densité, LDPC, de telle façon que la charge utile soit protégée contre les erreurs de transmission ; et
remplacer au moins une partie de la deuxième pluralité de bits à zéro (103) par une troisième pluralité de bits (105) indicative d'informations de sécurité afin de générer une deuxième trame (106) d'émission de couche physique, et une première interface (112) configurée pour délivrer, sur la base de la deuxième trame (106) d'émission de couche physique, un ou plusieurs signaux d'émission à la liaison câblée (130), et
le récepteur (120) comportant :
une deuxième interface (121) configurée pour recevoir le signal ou les signaux d'émission en provenance de la liaison câblée (130) ; et
un deuxième processeur (122) configuré pour :
déterminer, d'après le signal ou les signaux d'émission, une première trame (141) de réception de couche physique comportant au moins la première pluralité de bits (142) et la troisième pluralité de bits (143), la première trame (141) de réception de couche physique étant une trame LDPC ;
extraire la troisième pluralité de bits (143) de la première trame (141) de réception de couche physique ; et
remplacer la troisième pluralité de bits (143) par des bits à zéro afin de générer une deuxième trame (146) de réception de couche physique.

2. Système selon la revendication 1, les informations de sécurité étant cryptées.

3. Système selon la revendication 1 ou la revendication 2, les informations de sécurité comportant des informations concernant une opération parmi une négociation de clé cryptographique, une mise à l'épreuve de clé cryptographique, et une mise à jour de clé cryptographique.

4. Système selon la revendication 3, la clé cryptographique étant une clé de chiffrement.

5. Système selon l'une quelconque des revendications 1 à 4, le deuxième processeur (122) étant configuré pour générer la deuxième trame (146) de réception de couche physique de façon à comprendre la deuxième pluralité de bits à zéro consécutifs (145) telle que définie par la norme de communication, la deuxième pluralité de bits à zéro (145) dans la deuxième trame (146) de réception de couche physique comportant les bits à zéro remplaçant la troisième pluralité de bits (143) dans la première trame (141) de réception de couche physique.

6. Système selon l'une quelconque des revendications 1 à 5, le deuxième processeur (122) étant configuré pour fournir la deuxième trame (146) de réception de couche physique à une circuiterie servant à traiter la première pluralité de bits (142).

7. Système selon l'une quelconque des revendications 1 à 6, le deuxième processeur (122) étant configuré pour fournir la deuxième pluralité de bits (143) à une circuiterie servant à la sécurité de communication.

8. Procédé de transmission, par un système de communication câblé, d'informations de sécurité via une liaison câblée en plus d'une charge utile, le système de communication câblé comportant un émetteur et un récepteur couplés via la liaison câblée, le procédé comportant les étapes consistant à :
recevoir, au niveau de l'émetteur, une première trame d'émission de couche physique comportant au moins une première pluralité de bits indicative de la charge utile et une deuxième pluralité de bits à zéro consécutifs, la deuxième pluralité de bits à zéro (105) étant définie par une norme de communication pour coder la charge utile à l'aide d'un codage par code de contrôle de parité à faible densité, LDPC, de telle façon que la charge utile soit protégée contre les erreurs de transmission ;
remplacer, au niveau de l'émetteur, au moins une partie de la deuxième pluralité de bits à zéro par une troisième pluralité de bits indicative des informations de sécurité afin de générer une deuxième trame d'émission de couche physique ;
faire délivrer, par l'émetteur et sur la base de la deuxième trame d'émission de couche physique, un ou plusieurs signaux d'émission à la liaison câblée ;
recevoir, au niveau du récepteur, le signal ou les signaux d'émission en provenance de la liaison câblée ;
faire déterminer, par le récepteur et d'après le signal ou les signaux d'émission, une première trame de réception de couche physique comportant au moins la première pluralité de bits et la troisième pluralité de bits, la première trame de réception de couche physique étant une trame LDPC ;
extraire la troisième pluralité de bits de la première trame de réception de couche physique ; et
remplacer la troisième pluralité de bits par des bits à zéro afin de générer une deuxième trame de réception de couche physique.

9. Procédé selon la revendication 8, les informations de sécurité étant cryptées.

10. Procédé selon la revendication 8 ou la revendication 9, les informations de sécurité comportant des informations concernant une opération parmi une négociation de clé cryptographique, une mise à l'épreuve de clé cryptographique, et une mise à jour de clé cryptographique.

11. Procédé selon la revendication 10, la clé cryptographique étant une clé de chiffrement.

12. Procédé selon l'une quelconque des revendications 8 à 11, la deuxième trame de réception de couche physique étant générée de façon à comprendre la deuxième pluralité de bits à zéro consécutifs telle que définie par la norme de communication, la deuxième pluralité de bits à zéro dans la deuxième trame de réception de couche physique comportant les bits à zéro remplaçant la troisième pluralité de bits dans la première trame de réception de couche physique.

13. Procédé selon l'une quelconque des revendications 8 à 12, comportant en outre :
la fourniture, par le récepteur, de la deuxième trame de réception de couche physique à une circuiterie servant à traiter la première pluralité de bits.

14. Procédé selon l'une quelconque des revendications 8 à 13, comportant en outre :
la fourniture, par le récepteur, de la deuxième pluralité de bits à une circuiterie servant à la sécurité de communication.
